# FASCICULE DE BREVET EUROPEEN

(11) **EP 3 808 597 B1**
(45) Date de publication et mention de la délivrance du brevet: **24.08.2022**
(21) Numéro de dépôt: 20200617.7
(22) Date de dépôt: 07.10.2020
(51) Int. Cl.: B60N 2/30, B60N 2/80, B60N 2/005

(54) **SIÈGE DE VÉHICULE AUTOMOBILE ET VÉHICULE AUTOMOBILE**
SITZ FÜR KRAFTFAHRZEUG UND KRAFTFAHRZEUG
MOTOR VEHICLE SEAT AND MOTOR VEHICLE

(30) Priorité: 18.10.2019 FR 1911660
(43) Date de publication de la demande: 21.04.2021
(73) Titulaire: Renault s.a.s, 92100 Boulogne Billancourt (FR)
(72) Inventeur: DE MANEVILLE, Gael, 14470 Courseulles sur mer (FR); ROUXEL, Yves, 78320 LA VERRIERE (FR)
(74) Mandataire: Renault Group

(56) Documents cités:
- EP-A1- 1 382 492
- EP-A1- 3 418 124
- EP-A1- 3 428 008

## Description

### DOMAINE TECHNIQUE DE L'INVENTION

La présente invention concerne de manière générale l'agencement d'un habitacle de véhicule.

Elle concerne plus particulièrement un siège pour véhicule automobile comportant :
- un dossier,
- un appui-tête comportant au moins une tige pour son montage sur le dossier,
- une structure porteuse qui délimite un logement d'accueil pour l'appui-tête, et
- une assise montée mobile sur ladite structure porteuse entre une position d'utilisation et une position déportée.

L'invention concerne également un véhicule équipé d'un tel siège, et notamment un véhicule du type utilitaire.

L'invention trouve une application particulière et avantageuse dans la réalisation d'un siège passager, c'est-à-dire d'un siège prévu pour être situé à côté du siège conducteur du véhicule.

### ETAT DE LA TECHNIQUE

Les véhicules automobiles comprennent généralement deux sièges avant situés côte-à-côte. L'un des sièges, appelé siège conducteur, est situé en regard du volant tandis que l'autre, appelé siège passager, permet d'accueillir un éventuel passager.

Il est connu d'équiper ce siège passager d'un dossier rabattable vers l'avant. Ainsi, lorsqu'il n'y a pas de passager dans le véhicule, le conducteur peut basculer ce dossier afin de libérer un espace de chargement communiquant avec l'arrière du véhicule. Cet espace de chargement supplémentaire s'avère particulièrement intéressant lorsque le conducteur souhaite embarquer dans le véhicule des objets de longueurs importantes.

On connait ainsi du document EP-A-3 428 008 un siège repliable, dont l'assise peut basculer vers l'avant, et dont le dossier peut ensuite basculer vers l'avant, en lieu et place de l'assise.

Un intérêt de ce siège est qu'une fois tous ses composants basculés, la face arrière du dossier crée, avec le reste du plancher du véhicule, une surface plane facilitant la charge d'objets de grandes longueurs.

Dans ce document, pour ne pas entraver la bascule complète du dossier, il est prévu que l'appui-tête soit retiré du dossier et placé dans un logement situé sous l'emplacement de l'assise. Sans cela, l'appui-tête viendrait percuter la planche de bord du véhicule et empêcherait effectivement le dossier de basculer complètement.

L'inconvénient majeur de cette solution est qu'il arrive, au moment de ramener le siège en position d'utilisation, que l'usager oublie de replacer l'appui-tête sur le dossier, ce qui peut évidemment s'avérer dangereux pour l'occupant de ce siège.

### PRESENTATION DE L'INVENTION

Afin de remédier à l'inconvénient précité de l'état de la technique, la présente invention propose une solution permettant d'empêcher l'usager d'oublier de remettre l'appui-tête sur le dossier.

Plus particulièrement, on propose selon l'invention un siège tel que défini dans l'introduction, dans lequel l'assise comporte un accessoire de blocage qui, lorsque l'appui-tête est installé dans le logement d'accueil, est adapté à venir buter contre la tige de l'appui-tête à la faveur du déplacement de l'assise depuis sa position déportée vers sa position d'utilisation.

Ainsi, grâce à l'invention, lorsque l'appui-tête a été retiré du dossier et placé dans le logement d'accueil (dans une position telle qu'il n'empêche pas le dossier de basculer complètement), sa tige peut servir de butée pour empêcher le retour de l'assise en position d'utilisation. Du fait de cette butée, l'usager est alors forcé de retirer l'appui-tête de son logement d'accueil avant de ramener l'assise en position d'utilisation, ce qui permet de lui rappeler de replacer l'appui-tête sur le dossier.

D'autres caractéristiques avantageuses et non limitatives du siège conforme à l'invention, prises individuellement ou selon toutes les combinaisons techniquement possibles, sont les suivantes :
- l'assise comporte une ossature et un système à bielle monté rotatif, d'un côté, sur la structure porteuse, et, de l'autre, sur l'ossature, et dans lequel l'accessoire de blocage est situé sur le système de bielle ;
- le système de bielle comporte deux bielles fixées l'une à l'autre au moyen d'un arbre de liaison, et dans lequel l'accessoire de blocage est fixé à l'arbre de liaison ;
- l'accessoire de blocage comporte un fil métallique en forme de U, qui comprend deux bras fixés à l'arbre de liaison et une embase adaptée à venir buter contre la tige de l'appui-tête à la faveur du déplacement de l'assise depuis sa position déportée vers sa position d'utilisation ;
- l'un au moins des deux bras est recourbé autour de l'arbre de liaison, ce bras présentant une première partie d'extrémité qui s'étend depuis l'arbre de liaison jusqu'à l'embase, et une seconde partie d'extrémité libre qui s'étend depuis l'arbre de liaison jusqu'à distance de l'arbre de liaison ;
- l'accessoire de blocage comporte une paroi qui s'étend le long des deux bras et de l'embase, d'un côté du fil métallique ;
- le système à bielle comporte deux bielles ;
- l'accessoire de blocage comporte une paroi de liaison qui fixe ensemble les deux bielles ;
- le système à bielle comporte un arbre de liaison qui fixe ensemble les deux bielles ;
- la paroi de liaison est située à l'opposé du logement d'accueil par rapport à l'arbre de liaison ;
- la paroi de liaison présente un bord qui s'étend entre les deux bielles et qui est au moins en partie recourbé pour venir buter contre la tige de l'appui-tête à la faveur du déplacement de l'assise depuis sa position déportée vers sa position d'utilisation. L'invention propose également un véhicule automobile comprenant un siège conducteur et un siège passager tel que précité.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une représentation schématique des composants d'un siège repliable conforme à l'invention et des liens de mobilité entre ces composants ;
[Fig. 2] est une vue schématique du siège de la figure 1, en place dans l'habitacle d'un véhicule automobile ;
[Fig. 3] est une vue schématique en perspective d'un accessoire de blocage conforme à un premier mode de réalisation de l'invention ;
[Fig. 4] est une vue est une vue schématique de côté d'une partie du siège de la figure 1, sur laquelle l'accessoire de blocage de la figure 3 se trouve dans une première position ;
[Fig. 5] est une vue est une vue schématique de côté d'une partie du siège de la figure 1, sur laquelle l'accessoire de blocage de la figure 3 se trouve dans une seconde position ;
[Fig. 6] est une vue est une vue schématique de côté d'une partie du siège de la figure 1, sur laquelle l'accessoire de blocage de la figure 3 se trouve dans une troisième position ;
[Fig. 7] est une vue schématique en perspective d'un accessoire de blocage conforme à un second mode de réalisation de l'invention ;
[Fig. 8] est une vue schématique en perspective du siège de la figure 2, et d'un accessoire de blocage conforme à un troisième mode de réalisation de l'invention ;
[Fig. 9] est une vue une vue schématique en perspective de l'accessoire de blocage de la figure 8 ;
[Fig. 10] est une vue est une vue schématique de côté d'une partie du siège de la figure 1, sur laquelle l'accessoire de blocage de la figure 8 se trouve dans une première position ;
[Fig. 11] est une vue est une vue schématique de côté d'une partie du siège de la figure 1, sur laquelle l'accessoire de blocage de la figure 8 se trouve dans une seconde position ;
[Fig. 12] est une vue est une vue schématique de côté d'une partie du siège de la figure 1, sur laquelle l'accessoire de blocage de la figure 8 se trouve dans une troisième position.

En préliminaire on notera que les éléments identiques ou similaires des différents modes de réalisation de l'invention représentés sur les différentes figures seront, dans la mesure du possible, référencés par les mêmes signes de référence et ne seront pas décrits à chaque fois.

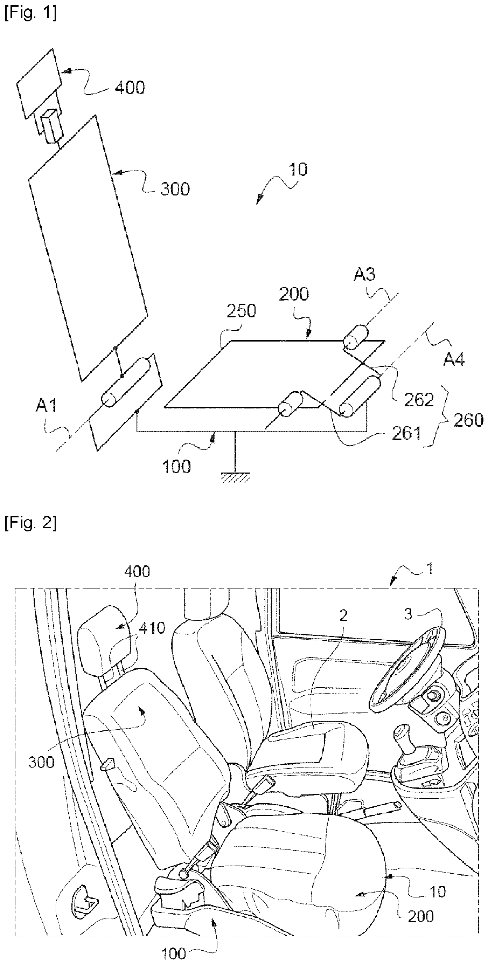

Sur la figure 1, on a représenté de manière très schématique un siège 10 prévu pour être installé dans un habitacle d'un véhicule, ici un véhicule automobile.

Dans la description, les termes « avant » et « arrière » seront utilisés par rapport à ce véhicule automobile, l'avant d'un élément désignant le côté de cet élément qui est tourné vers le capot du véhicule et l'arrière désignant le côté de cet élément qui est tourné vers le coffre.

De la même manière, les termes «inférieur » et «supérieur » seront utilisés par rapport à ce véhicule automobile, la partie inférieure d'un élément désignant la partie de cet élément qui est située du côté du plancher du véhicule et la partie supérieure désignant la partie de cet élément qui est située du côté du toit.

Par ailleurs, dans la suite de la description, on dira de deux éléments qu'ils sont « articulés » lorsqu'ils seront connectés ensemble au moyen d'une simple liaison pivot, avec donc un seul et unique degré de liberté.

Tel qu'il apparaît sur l'exemple de la figure 2, ce véhicule automobile 1 est un véhicule « utilitaire », c'est-à-dire un véhicule comportant une unique rangée de sièges. Il ne comporte en revanche pas de siège ou de banquette arrière, puisque l'ensemble de la zone arrière du véhicule constitue un coffre de chargement. En variante, il pourrait s'agir de tout autre type de véhicule automobile.

Ce véhicule automobile 1 comporte ici exactement deux sièges, dont un siège conducteur 2 situé en face du volant 3 du véhicule, et un siège 10 passager situé à côté du siège conducteur 2. Tel qu'il est représenté sur la figure 2, le siège 10 passager est situé à droite du siège conducteur 2.

La présente invention porte alors plus précisément sur ce siège 10 passager.

Comme le montre schématiquement la figure 1, ce siège 10 comporte une assise 200 et un dossier 300 montés sur une même structure porteuse 100.

L'assise 200 et le dossier 300 comportent chacun une partie structurelle (ci-après appelée « armature ») recouverte, pour le confort du passager, d'une garniture.

Sur les figures 1 et 2, l'assise 200 et le dossier 300 sont représentés en position d'utilisation, c'est-à-dire en position pour accueillir un passager.

Dans cette position d'utilisation, l'assise 200 s'étend sensiblement horizontalement (avec une légère inclinaison vers l'arrière comprise entre 1 et 20 degrés) et le dossier 300 s'étend sensiblement verticalement (avec une légère inclinaison vers l'arrière comprise entre 5 et 30 degrés).

Ce siège 10 est repliable, c'est-à-dire qu'il peut basculer de manière à libérer de l'espace de chargement dans le véhicule.

Les composants du siège passager 10 présentent à cet effet de nombreuses mobilités. Pour bien comprendre l'invention, on peut alors tout d'abord décrire brièvement ces mobilités, en référence à la figure 1.

Ici, la structure porteuse 100 est représentée comme étant fixée au plancher du véhicule.

Bien entendu, en variante, elle pourra être montée mobile sur le plancher du véhicule. Elle pourrait par exemple être montée sur le plancher du véhicule avec une mobilité de translation selon un axe parallèle ou orthogonal à l'axe longitudinal du véhicule.

Le dossier 300 est articulé sur la structure porteuse 100 autour d'un axe inférieur A1. Cet axe inférieur A1 est globalement situé sous le bord inférieur du dossier 300. Il s'étend en pratique horizontalement et orthogonalement à l'axe longitudinal du véhicule automobile 1.

Ainsi, le dossier 300 peut basculer depuis sa position d'utilisation (voir figure 2) jusqu'à une position rabattue vers l'avant.

Ici, le dossier 300 est équipé sur son bord supérieur d'un appui-tête 400. Ce dernier est monté de façon à pouvoir coulisser par rapport au dossier, de manière à ce que sa hauteur puisse être ajustée à la taille du passager. Il est en outre démontable du dossier.

Il comporte pour cela une armature qui est en partie recouverte d'une garniture et qui comporte ici deux tiges 410 parallèles qui font saillie de la garniture. En variante, il pourrait ne comporter qu'une seule tige.

L'assise 200 est pour sa part montée mobile sur la structure porteuse 100 au moyen d'un système à bielle 260 qui comporte ici deux bielles 261, 262.

Ces bielles 261, 262 sont chacune articulées, d'un côté, sur l'armature 250 de l'assise 200 et, de l'autre, sur la structure porteuse 100.

Chaque bielle 261, 262 présente ainsi :
- une première mobilité de pivotement par rapport à l'armature 250 de l'assise 200, autour d'un premier axe de pivot A3, et
- une seconde mobilité de pivotement par rapport à la structure porteuse 100, autour d'un second axe de pivot A4.

Ce second axe de pivot A4 est globalement situé sous le bord avant de l'assise 200 (en position d'utilisation). Il s'étend horizontalement et orthogonalement à l'axe longitudinal du véhicule automobile.

Le premier axe de pivot A3 s'étend quant à lui parallèlement au second axe de pivot A4.

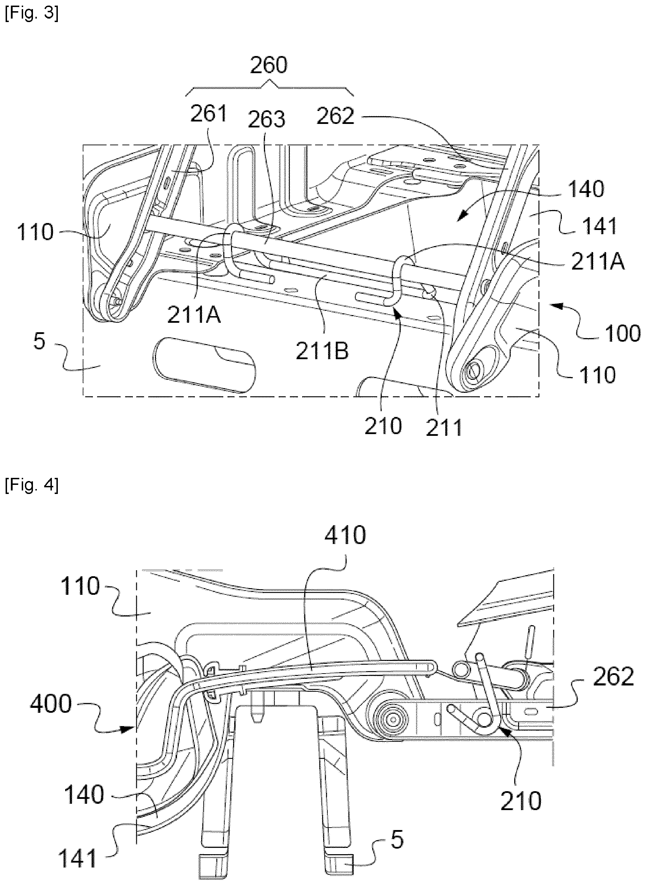

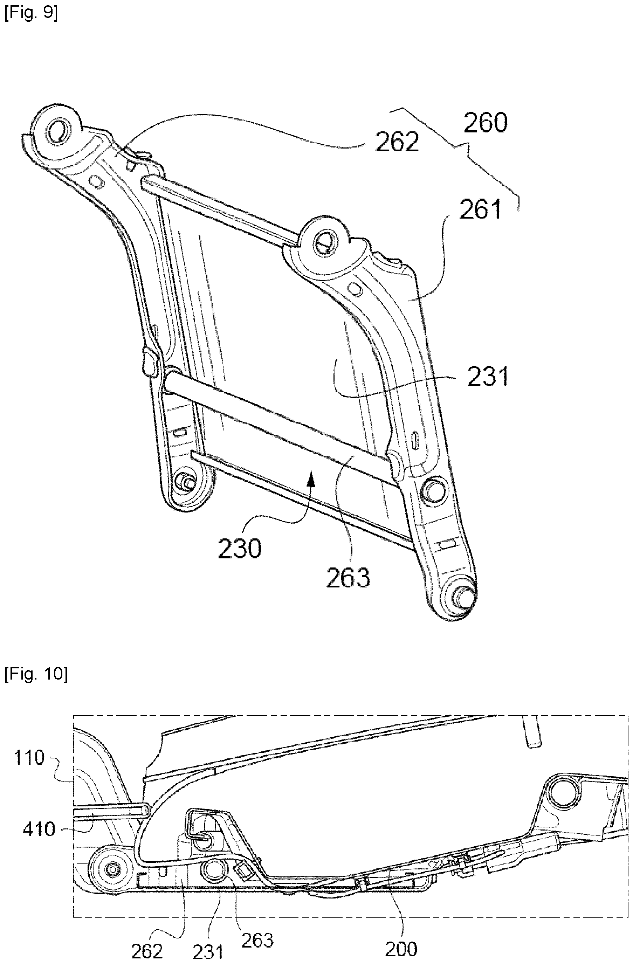

Comme le montrent les figures 3 et 9, ce système de bielle 260 comporte, outre les deux bielles 261, 262 précités, un arbre de liaison 263 qui est fixé par ses deux extrémités aux bielles 261, 262 et qui permet de forcer les deux bielles à pivoter conjointement.

Ainsi, l'assise 200 peut être déplacée depuis sa position d'utilisation (voir figure 2) jusqu'à une position déportée vers l'avant, sous la planche de bord du véhicule, en conservant une orientation sensiblement horizontale.

Grâce à la position de l'axe inférieur A1 (en dessous du dossier 300), lorsque le dossier 300 bascule en position rabattue, il se place en lieu et place de l'assise 200.

L'objectif premier est ainsi que sa face arrière s'étende le plus horizontalement possible, par exemple avec un angle de 5 degrés maximum avec l'horizontale.

L'objectif second est que sa face arrière s'étende à hauteur du plancher du coffre (de façon à ne pas faire apparaître de marche entre le coffre et l'habitacle lorsque le dossier 300 est rabattu).

On comprend ici que le dossier 300 ne peut être positionné en position rabattue vers l'avant que si l'assise 200 a préalablement été escamotée vers l'avant.

Le problème est alors qu'étant donnée la hauteur du dossier 300 et de l'appui-tête 400, lorsque le dossier 300 bascule en lieu et place de l'assise 200, l'appui-tête 400 vient buter contre l'assise 100 ou contre la planche de bord du véhicule.

Pour éviter cela, il convient de démonter l'appui-tête 400 du dossier 300 et de le ranger ailleurs.

Dans ce dessein, la structure porteuse 100 délimite un logement d'accueil 140 pour l'appui-tête 400.

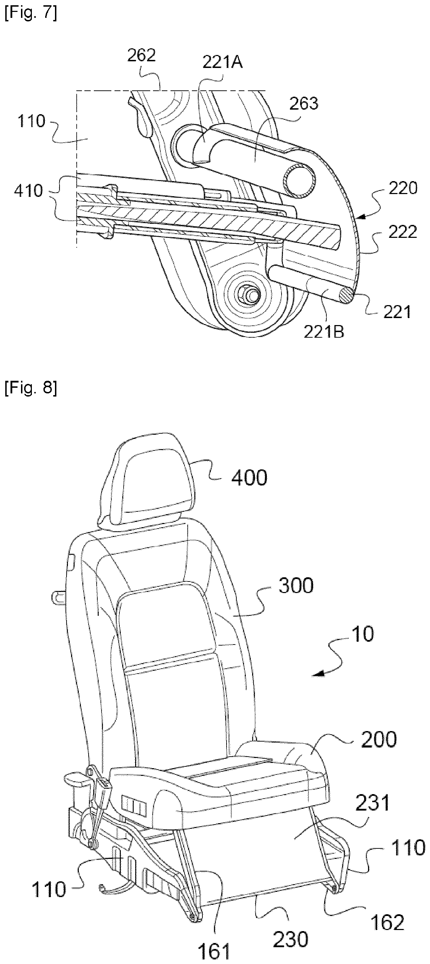

Comme le montrent bien les figures 3 et 8, cette structure porteuse 100 comporte ici deux flancs 110 latéraux qui sont formés par des plaques de tôle embouties et qui sont fixés au plancher du véhicule par des vis et l'un à l'autre par des éléments de traverse. Comme le montre la figure 3, ces deux flancs 110 délimitent ensemble un espace donc une partie est laissée vide de façon à pouvoir accueillir l'appui-tête.

En pratique, le logement d'accueil est plus précisément délimité par une coque 141 en matière plastique, qui est fixée aux flancs 110 et/ou à une traverse 5 du plancher du véhicule et qui s'étend sous les flancs 110.

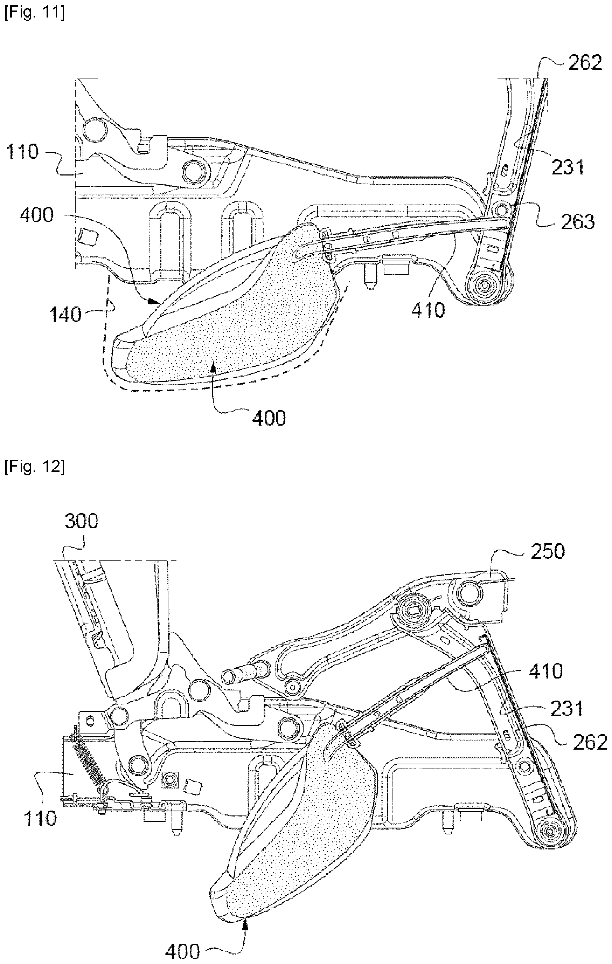

Le logement d'accueil 140 est ainsi conformé de façon à recevoir l'appui-tête dans une position bien particulière, qui apparaît par exemple sur la figure 11. Dans cette position, la garniture de l'appui-tête 400 est orientée vers l'arrière et est posée en appui contre le fond de la coque 141, tandis que les tiges 410 pointent vers l'avant.

A garniture est ainsi majoritairement logée à l'intérieur du logement d'accueil 140 tandis que les tiges 140 font au moins en partie saillie hors du logement d'accueil 140. Ainsi installé dans le logement d'accueil 140, l'appui-tête 400 n'entrave pas le mouvement de bascule du dossier 300 depuis sa position d'utilisation jusqu'à sa position basculée vers l'avant.

L'inconvénient de loger l'appui-tête 400 dans le logement d'accueil 140 est que l'usager risque d'oublier de le remettre en place lorsqu'il ramène l'assise et le dossier en position d'utilisation.

Pour éviter cela, selon une caractéristique particulièrement avantageuse de l'invention, l'assise 200 comporte un accessoire de blocage qui, lorsque l'appui-tête 400 est installé dans le logement d'accueil 140, est adapté à venir buter contre les tiges 410 de l'appui-tête 400 à la faveur du déplacement de l'assise 200 depuis sa position déportée vers sa position d'utilisation, de façon à empêcher l'assise 200 d'atteindre sa position d'utilisation.

Sur les figures 3 à 6, sur la figure 7 et sur les figures 8 à 12, on a respectivement représenté trois modes de réalisation de cet accessoire de blocage 210 ; 220 ; 230.

Dans tous ces modes, l'accessoire de blocage 210 ; 220 ; 230 est monté sur le système de bielle 260 de l'assise 200.

Dans le premier mode de réalisation de l'invention illustré sur les figures 3 à 6, l'accessoire de blocage 210 est fixé à l'arbre de liaison 263, ici par deux soudures.

Cet accessoire de blocage 210 se présente dans ce mode de réalisation sous la forme d'un fil métallique 211 de section circulaire, qui est plié en forme de U de façon à présenter une embase 211B et deux bras 211A.

Chacun de ces deux bras 211A est lui-même replié en son centre en arcde-cercle, de façon à pouvoir épouser la forme de l'arbre de liaison 263 sur lequel il est soudé. Les extrémités libres des bras sont en outre repliées à angle droit l'une vers l'autre.

Sur les figures 4 à 6, on a représenté l'un des flancs 110 de la structure porteuse 100, et la bielle 262 qui est articulée sur ce flanc 110. On a également représenté l'accessoire de blocage 210 et l'appui-tête 400 en position logée dans le logement d'accueil 140.

Sur la figure 4, l'assise est en position déportée vers l'avant si bien que la bielle 262 s'étend horizontalement, à l'avant du flanc 110. Dans cette position, les deux extrémités de chaque bras de l'accessoire de blocage 210 s'étendent vers le haut et vers l'arrière.

Cette orientation dans laquelle l'accessoire de blocage 210 est fixée sur l'arbre de liaison 263 permet à cet accessoire de correctement assurer sa fonction.

En effet, lorsque l'usager tente de ramener l'assise 200 en position d'utilisation, l'accessoire de blocage 210 va permettre de bloquer ce retour tant que l'appui-tête 400 se trouvera logé dans son logement d'accueil 410.

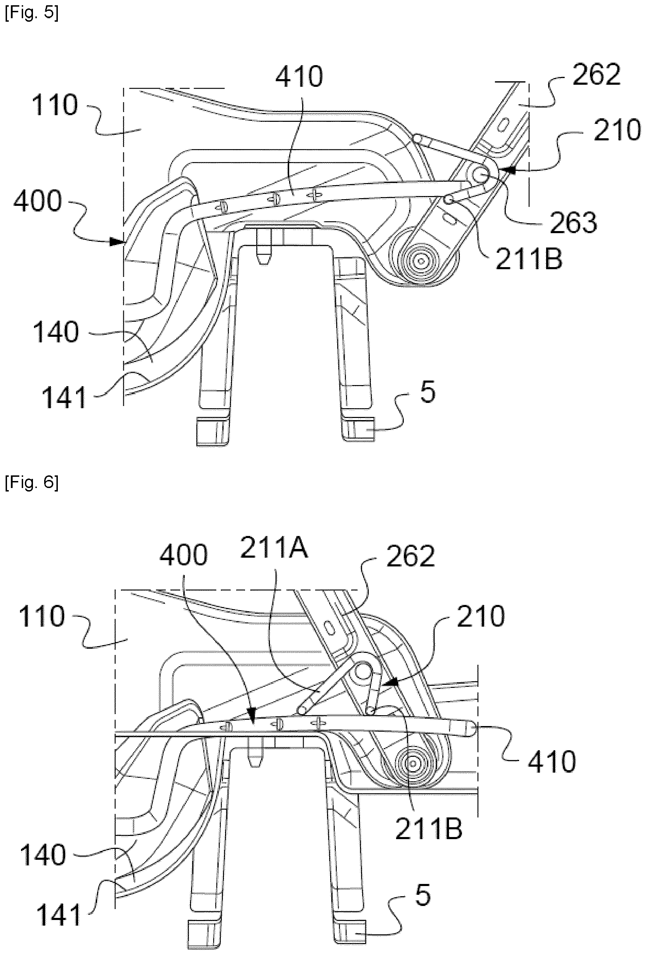

Sur la figure 5, on a ainsi représenté la bielle 262 dans une première position intermédiaire entre la position déportée vers l'avant et la position d'utilisation. On y observe que l'embase 211B de l'accessoire de blocage 210 vient crocheter les tiges 410 de l'appui-tête 400 de façon à ce que ces dernières viennent buter contre l'arbre de liaison 263, empêchant les bielles 261, 262 de pivoter davantage.

Si jamais l'usager parvenait malgré cela à faire encore pivoter les bielles 261, 262, il ne pourrait pas pour autant ramener complètement l'assise 200 en position d'utilisation.

Sur la figure 6, on a ainsi représenté la bielle 262 dans une seconde position intermédiaire entre la première position intermédiaire et la position d'utilisation. On y observe que l'embase 211B et les deux bras 211A de l'accessoire de blocage 210 viennent s'appuyer contre les tiges 410 de l'appui-tête 400, si bien que ces dernières empêchent les bielles 261, 262 de pivoter davantage.

Dans cette seconde position angulaire, les bielles 261, 262 sont dans une position écartée angulairement de plus de 20 degrés de la position qu'elles occupent lorsque le siège est en position d'utilisation. De cette manière, l'usager perçoit clairement qu'il y a un problème. Il peut en outre facilement regarder sous l'assise 200 et percevoir que le problème vient de l'appui-tête 400. Aussi peut-il alors se rappeler qu'il doit replacer l'appui-tête 400 sur le dossier 300.

On observe sur la figure 3 que dans ce premier mode de réalisation, les deux extrémités de chaque bras 211A de l'accessoire de blocage 210 s'étendent à distance de l'arbre de liaison 263.

Dans le second mode de réalisation de l'invention illustré sur la figure 7, l'accessoire de blocage 220 présente une forme homologue de celle de l'accessoire de blocage 210 illustré sur les figures précédentes (avec un fil métallique 221 replié en forme de U), à ceci près que :
- les extrémités libres des bras 221A de l'accessoire de blocage 220 sont plus courtes et sont coupées au niveau de l'arbre de liaison 263, et que
- l'accessoire de blocage 220 comporte en outre une paroi 222 qui s'étend le long des deux bras 221A et de l'embase 221B, d'un côté du fil métallique 221.

Cette paroi 222 présente une forme incurvée de façon à suivre la courbure des bras 221A sur lesquels elle est soudée. Elle est ainsi convexe du côté du fil métallique 221. Cette paroi 222 est ainsi soudée du côté inférieur du fil métallique 221 lorsque le siège est en position déportée vers l'avant.

De cette manière, lorsque l'assise 200 est ramenée vers sa position d'utilisation et que les bielles 261, 262 pivotent vers l'arrière, cette paroi 222 vient buter contre les extrémités libres des tiges 410 de l'appui-tête 400. Le blocage total de l'assise 200 est alors assuré par l'embase 221B et par la paroi 222 de l'accessoire de blocage, qui forment ensemble un coin empêchant les tiges 410 de l'appui-tête 400 de s'échapper.

Dans le troisième mode de réalisation de l'invention illustré sur les figures 8 à 12, l'accessoire de blocage 230 présente une forme encore différente de celles illustrées sur les figures précédentes.

Comme le montrent bien les figures 8 et 9, l'accessoire de blocage 230 comporte une paroi de liaison 231 qui s'étend entre les deux bielles 261, 262, de l'une jusqu'à l'autre de ces deux bielles et sur plus de la moitié de la longueur des bielles.

Cette paroi de liaison 231 est réalisée dans une matière plastique ou métallique.

Elle présente une forme sensiblement plane et rectangulaire, avec deux bords latéraux situés contre les deux bielles, et deux bords d'extrémités recourbés l'un vers l'autre, d'un même côté du reste de la paroi de liaison 231.

La paroi de liaison 231 est située à l'opposé du logement d'accueil 140 par rapport à l'arbre de liaison 263. En d'autres termes, comme le montre la figure 10, elle est située sous cet arbre de liaison 263 lorsque l'assise est en position déportée avant.

Les bords d'extrémité de la paroi de liaison 231 sont alors recourbés du côté de cet arbre de liaison 263.

De ce fait, comme le montre la figure 11, lorsque l'assise 200 est ramenée vers sa position d'utilisation et que les bielles pivotent vers l'arrière, cette paroi de liaison 231 vient buter contre les extrémités libres des tiges 410 de l'appui-tête 400. Le blocage total de l'assise 200 est alors assuré par l'arbre de liaison 263 et par la paroi de liaison 231 de l'accessoire de blocage 230, qui forment ensemble un coin empêchant les tiges 410 de l'appui-tête 400 de s'échapper.

Quand bien même elles s'échapperaient, comme le montre la figure 12, elles se trouveraient ensuite coincé dans le coin formé par l'un des bords d'extrémité recourbé de la paroi de liaison 231.

## Revendications

1. Siège (10) pour véhicule automobile (1) comportant :
- un dossier (300),
- un appui-tête (400) comportant au moins une tige (410) pour son montage sur le dossier (300),
- une structure porteuse (100) qui délimite un logement d'accueil (140) pour l'appui-tête (400), et
- une assise (200) montée mobile sur ladite structure porteuse (100) entre une position d'utilisation et une position déportée,
**caractérisé en ce que** l'assise (200) comporte un accessoire de blocage (210 ; 220 ; 230) qui, lorsque l'appui-tête (400) est installé dans le logement d'accueil (140), est adapté à venir buter contre la tige (410) de l'appui-tête (400) à la faveur du déplacement de l'assise (200) depuis sa position déportée vers sa position d'utilisation.

2. Siège (10) selon la revendication 1, dans lequel l'assise (200) comporte une ossature (250) et un système à bielle (260) monté rotatif, d'un côté, sur la structure porteuse (100), et, de l'autre, sur l'ossature (250), et dans lequel l'accessoire de blocage (210 ; 220 ; 230) est situé sur le système de bielle (260).

3. Siège (10) selon la revendication 2, dans lequel le système de bielle (260) comporte deux bielles (261, 262) fixées l'une à l'autre au moyen d'un arbre de liaison (263), et dans lequel l'accessoire de blocage est fixé à l'arbre de liaison (263).

4. Siège (10) selon la revendication 3, dans lequel l'accessoire de blocage (210 ; 220) comporte un fil métallique (211 ; 221) en forme de U, qui comprend deux bras (211A, 221A) fixés à l'arbre de liaison (263) et une embase (211B, 221B) adaptée à venir buter contre la tige (410) de l'appui-tête (400) à la faveur du déplacement de l'assise (200) depuis sa position déportée vers sa position d'utilisation.

5. Siège (10) selon la revendication 4, dans lequel l'un au moins des deux bras (211A) est recourbé autour de l'arbre de liaison (263), ce bras (211A) présentant une première partie d'extrémité qui s'étend depuis l'arbre de liaison (263) jusqu'à l'embase (211B), et une seconde partie d'extrémité libre qui s'étend depuis l'arbre de liaison (263) jusqu'à distance de l'arbre de liaison (263).

6. Siège (10) selon la revendication 4 ou 5, dans lequel l'accessoire de blocage (220) comporte une paroi (222) qui s'étend le long des deux bras (221A) et de l'embase (221B), d'un côté du fil métallique (221).

7. Siège (10) selon la revendication 2, dans lequel le système à bielle (260) comporte deux bielles (261, 262) et dans lequel l'accessoire de blocage (230) comporte une paroi de liaison (231) qui fixe ensemble les deux bielles (261, 262).

8. Siège (10) selon la revendication 7, dans lequel le système à bielle (260) comporte un arbre de liaison (263) qui fixe ensemble les deux bielles (261, 262) et dans lequel la paroi de liaison (231) est située à l'opposé du logement d'accueil (140) par rapport à l'arbre de liaison (263).

9. Siège (10) selon la revendication 7 ou 8, dans lequel la paroi de liaison (231) présente un bord qui s'étend entre les deux bielles (261, 262) et qui est au moins en partie recourbé pour venir buter contre la tige (410) de l'appui-tête (400) à la faveur du déplacement de l'assise (200) depuis sa position déportée vers sa position d'utilisation.

10. Véhicule automobile (1) comprenant un siège conducteur (2), **caractérisé en ce qu'**il comporte en outre un siège (10) passager qui est situé à côté du siège conducteur (2) et qui est conforme à l'une des revendications précédentes.

## Patentansprüche

1. Sitz (10) für ein Kraftfahrzeug (1), welcher aufweist:
- eine Rückenlehne (300),
- eine Kopfstütze (400), die wenigstens eine Stange (410) für ihre Anbringung auf der Rückenlehne (300) aufweist,
- eine Tragstruktur (100), welche einen Aufnahmeraum (140) für die Kopfstütze (400) begrenzt, und
- ein Sitzteil (200), das auf der Tragstruktur (100) zwischen einer Verwendungsposition und einer versetzten Position bewegbar angebracht ist,
**dadurch gekennzeichnet, dass** das Sitzteil (200) ein Blockierhilfsmittel (210; 220; 230) aufweist, welches dazu eingerichtet ist, wenn die Kopfstütze (400) im Aufnahmeraum (140) angeordnet ist, durch die Verlagerung des Sitzteils (200) aus seiner versetzten Position zu seiner Verwendungsposition hin an der Stange (410) der Kopfstütze (400) zur Anlage zu kommen.

2. Sitz (10) nach Anspruch 1, wobei das Sitzteil (200) ein Gerüst (250) und ein Schubstangensystem (260), das auf einer Seite auf der Tragstruktur (100) und auf der anderen auf dem Gerüst (250) drehbar gelagert ist, aufweist und wobei sich das Blockierhilfsmittel (210; 220; 230) auf dem Schubstangensystem (260) befindet.

3. Sitz (10) nach Anspruch 2, wobei das Schubstangensystem (260) zwei Schubstangen (261, 262) aufweist, die mittels einer Verbindungswelle (263) aneinander befestigt sind, und wobei das Blockierhilfsmittel an der Verbindungswelle (263) befestigt ist.

4. Sitz (10) nach Anspruch 3, wobei das Blockierhilfsmittel (210; 220) einen U-förmigen Metalldraht (211; 221) aufweist, welcher zwei an der Verbindungswelle (263) befestigte Arme (211A, 221A) und ein Unterteil (211B, 221B), das dazu eingerichtet ist, durch die Verlagerung des Sitzteils (200) aus seiner versetzten Position zu seiner Verwendungsposition hin an der Stange (410) der Kopfstütze (400) zur Anlage zu kommen, umfasst.

5. Sitz (10) nach Anspruch 4, wobei wenigstens einer der zwei Arme (211A) um die Verbindungswelle (263) herumgebogen ist, wobei dieser Arm (211A) einen ersten Endteil, welcher sich von der Verbindungswelle (263) bis zu dem Unterteil (211B) erstreckt, und einen freien zweiten Endteil, welcher sich von der Verbindungswelle (263) bis in einen Abstand zu der Verbindungswelle (263) erstreckt, aufweist.

6. Sitz (10) nach Anspruch 4 oder 5, wobei das Blockierhilfsmittel (220) eine Wand (222) aufweist, welche sich auf einer Seite des Metalldrahtes (221) entlang der zwei Arme (221A) und des Unterteils (211B) erstreckt.

7. Sitz (10) nach Anspruch 2, wobei das Schubstangensystem (260) zwei Schubstangen (261, 262) aufweist und wobei das Blockierhilfsmittel (230) eine Verbindungswand (231) aufweist, welche die zwei Schubstangen (261, 262) aneinander befestigt.

8. Sitz (10) nach Anspruch 7, wobei das Schubstangensystem (260) eine Verbindungswelle (263) aufweist, welche die zwei Schubstangen (261, 262) aneinander befestigt, und wobei sich die Verbindungswand (231), bezogen auf die Verbindungswelle (263), gegenüber dem Aufnahmeraum (140) befindet.

9. Sitz (10) nach Anspruch 7 oder 8, wobei die Verbindungswand (231) einen Rand aufweist, welcher sich zwischen den zwei Schubstangen (261, 262) erstreckt und welcher wenigstens teilweise gekrümmt ist, um durch die Verlagerung des Sitzteils (200) aus seiner versetzten Position zu seiner Verwendungsposition hin an der Stange (410) der Kopfstütze (400) zur Anlage zu kommen.

10. Kraftfahrzeug (1), welches einen Fahrersitz (2) umfasst, **dadurch gekennzeichnet, dass** es außerdem einen Beifahrersitz (10) aufweist, welcher sich neben dem Fahrersitz (2) befindet und welcher einem der vorhergehenden Ansprüche entspricht.

## Claims

1. Seat (10) for a motor vehicle (1), having:
- a backrest (300),
- a headrest (400) having at least one rod (410) for mounting it on the backrest (300),
- a supporting structure (100) that delimits an accommodating recess (140) for the headrest (400), and
- a seat pan (200) mounted so as to be able to move on said supporting structure (100) between a use position and an offset position,
**characterized in that** the seat pan (200) has a blocking accessory (210; 220; 230) that, when the headrest (400) is installed in the accommodating recess (140), is designed to come to abut against the rod (410) of the headrest (400) owing to the movement of the seat pan (200) from its offset position towards its use position.

2. Seat (10) according to Claim 1, wherein the seat pan (200) has a framework (250) and a connecting rod system (260) mounted so as to be able to rotate, on the one hand, on the supporting structure (100), and, on the other, on the framework (250), and wherein the blocking accessory (210; 220; 230) is situated on the connecting rod system (260).

3. Seat (10) according to Claim 2, wherein the connecting rod system (260) has two connecting rods (261, 262) fastened to one another by means of a connecting shaft (263), and wherein the blocking accessory is fastened to the connecting shaft (263).

4. Seat (10) according to Claim 3, wherein the blocking accessory (210; 220) has a U-shaped metal wire (211; 221), which comprises two arms (211A, 221A) fastened to the connecting shaft (263) and a base (211B, 221B) designed to come to abut against the rod (410) of the headrest (400) owing to the movement of the seat pan (200) from its offset position towards its use position.

5. Seat (10) according to Claim 4, wherein at least one of the two arms (211A) is curved around the connecting shaft (263), this arm (211A) having a first end part that extends from the connecting shaft (263) as far as the base (211B), and a second, free end part that extends from the connecting shaft (263) away from the connecting shaft (263).

6. Seat (10) according to Claim 4 or 5, wherein the blocking accessory (220) has a wall (222) that extends along the two arms (221A) and the base (221B), on one side of the metal wire (221).

7. Seat (10) according to Claim 2, wherein the connecting rod system (260) has two connecting rods (261, 262) and wherein the blocking accessory (230) has a connecting wall (231) that fastens the two connecting rods (261, 262) together.

8. Seat (10) according to Claim 7, wherein the connecting rod system (260) has a connecting shaft (263) that fastens the two connecting rods (261, 262) together and wherein the connecting wall (231) is situated on the opposite side from the accommodating recess (140) with respect to the connecting shaft (263).

9. Seat (10) according to Claim 7 or 8, wherein the connecting wall (231) has an edge that extends between the two connecting rods (261, 262) and that is at least partially curved so as to come to abut against the rod (410) of the headrest (400) owing to the movement of the seat pan (200) from its offset position towards its use position.

10. Motor vehicle (1) comprising a driver seat (2), **characterized in that** it also has a passenger seat (10) that is situated next to the driver seat (2) and that is in accordance with one of the preceding claims.
